(19) Europäisches Patentamt / European Patent Office / Office européen des brevets

(11) **EP 3 060 464 B1**

(12) **FASCICULE DE BREVET EUROPEEN**

(45) Date de publication et mention
de la délivrance du brevet:
**19.07.2017 Bulletin 2017/29**

(21) Numéro de dépôt: **14824871.9**

(22) Date de dépôt: **21.10.2014**

(51) Int Cl.:
***B63B 21/20*** *(2006.01)*    ***F16G 13/12*** *(2006.01)*
***F16G 15/12*** *(2006.01)*

(86) Numéro de dépôt international:
**PCT/FR2014/052668**

(87) Numéro de publication internationale:
**WO 2015/059396 (30.04.2015 Gazette 2015/17)**

(54) **CHAINE D'ANCRAGE**

ANKERKETTE

ANCHOR CHAIN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.10.2013 FR 1360453**

(43) Date de publication de la demande:
**31.08.2016 Bulletin 2016/35**

(73) Titulaire: **Ideol**
**13600 La Ciotat (FR)**

(72) Inventeurs:
• **CHOISNET, Thomas**
**F-13006 Marseille (FR)**
• **MAROBIN, Stéphan**
**F-13600 La Ciotat (FR)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**KR-A- 20130 044 994**

## Description

<u>Arrière-plan de l'invention</u>

La présente invention concerne le domaine des chaînes d'ancrage, et plus particulièrement les chaînes d'ancrage pour des applications navales.

Dans le présent contexte, on comprend par « chaîne d'ancrage » une succession de mailles (ou « chaînons ») reliées les unes aux autres pour la transmission d'une tension mécanique, et permettant notamment de relier un corps flottant à un point d'ancrage pour restreindre le mouvement dudit corps flottant, comme illustré par exemple dans la publication de demande de brevet coréen KR 2013 0044994 A. Les mailles d'une telle chaîne d'ancrage peuvent notamment être métalliques. Elles peuvent être des mailles à étai, pour éviter leur écrasement, ou sans étai.

Quoique les chaînes d'ancrage soient conçues pour transmettre les efforts mécaniques principalement en tension, en pratique les chaînes d'ancrage d'un corps flottant soumises à des tensions importantes peuvent aussi se trouver soumises, à leurs extrémités, à des contraintes importantes par flexion, et en particulier à proximité de leur connexion avec le corps flottant. La cause de ces flexions est la combinaison des mouvements de rotation du corps flottant et des imperfections géométriques de surface de la zone de contact entre mailles adjacentes.

En effet, ces imperfections combinées à des tensions importantes bloquent l'articulation entre mailles adjacentes. Les mouvements du corps flottant induisent ainsi des efforts latéraux sur la chaîne d'ancrage et des moments de flexion transmis entre des mailles adjacentes. Dans le long terme, ces flexions récurrentes peuvent notamment provoquer des fractures par fatigue, comme décrit notamment dans l'article « Failure of chains by bending in deepwater mooring systems », présenté par P. Jean, K. Goosens et D. L'Hostis à l'Offshore Technology Conference de 2005 à Houston, Texas, Etats-Unis.

Suivant l'état de la technique, pour éviter cette fatigue et ainsi augmenter la durée de vie des chaînes d'ancrage, on a cherché à limiter les moments de flexion subis par les mailles de la chaîne en améliorant les articulations aux extrémités des chaînes ou en modifiant localement les mailles.

Ainsi, par exemple, dans les demandes internationales de brevet WO 2010/112603 et WO 98/40306, il a été proposé d'interposer des connecteurs à joint de cardan et long bras de levier entre l'extrémité de la chaîne d'ancrage et le corps flottant. Toutefois, des tels connecteurs présentent l'inconvénient d'être lourds et volumineux ce qui peut poser de problèmes d'intégration. En outre, le coût des joints à cardan, en particulier s'ils doivent résister un environnement agressif tel que l'eau de mer, est fort élevé.

Il a aussi été proposé d'interposer, non pas des joints articulés, mais des segments de câble entre l'extrémité de la chaîne d'ancrage et le corps flottant, notamment dans la demande internationale de brevet WO 2008/0951106. Ceci présente toutefois normalement l'inconvénient de préciser une détermination précise de la longueur de ce segment de câble avant l'ancrage du corps flottant, et donc aussi celle de la position du point d'ancrage.

Des dispositifs et procédés ont aussi été proposés pour remplacer des segments de chaîne en opération avant qu'ils atteignent un seuil de fatigue. Ceci peut être obtenu, par exemple, en passant ces segments au travers d'une poulie de renvoi ou « fairlead », ou un chaumard spécifique et en changeant les mailles en appui sur la connexion à l'aide d'un treuil, comme illustré par exemple dans la demande de brevet français FR 2 601 322. Toutefois, cela exige normalement l'installation de dispositifs lourds et complexes sur le corps flottant, ainsi que le stockage des segments de chaîne destinés au remplacement. En outre, les mailles de ces segments de chaîne de remplacement peuvent aussi être endommagées par leur passage par ces dispositifs.

<u>Objet et résumé de l'invention</u>

La présente invention vise à remédier à ces inconvénients. Plus spécifiquement, la présente description vise à proposer une chaîne d'ancrage qui permette d'éviter la fatigue par flexion des mailles en tête de chaîne.

Dans au moins un mode de réalisation, ce but est atteint grâce au fait que la chaîne d'ancrage comprend, à part une première pluralité de mailles, une deuxième pluralité de mailles en extrémité de chaîne comprenant au moins trois mailles successives, dans chacune desquelles au moins un parmi le diamètre de barre et la limite élastique du matériau est sensiblement supérieur à celui de chacune des mailles de la première pluralité. Par « diamètre de barre » d'une maille on entend le diamètre minimum d'une section transversale d'une barre formant cette maille.

Comme expliqué auparavant, les imperfections géométriques de surface de la zone de contact entre mailles adjacentes jouent un rôle important dans la transmission de moments de flexion entre mailles en tête de chaîne. On a découvert que les tests de résistance des chaînes avant leur installation constituent une source importante de ces imperfections géométriques. Ces tests sont normalement destinés à s'assurer de la qualité des soudures des barres formant les mailles, et aussi que la chaîne ne souffrira pas un allongement plastique sensible pendant sa durée de vie prévue. Typiquement, pendant ces tests, les chaînes sont éprouvées jusqu'à 70% de leur charge de rupture, ce qui peut toutefois dépasser ponctuellement la limite élastique du matériau des mailles, déformant ainsi de manière permanente les zones de contact entre mailles et créant des méplats à l'interface entre mailles adjacentes. Ces méplats pourront ensuite contribuer à transmettre des moments de flexion entre les mailles, générant ainsi des contraintes supplémentaires et variables dans les mailles, surtout en tête de chaîne, lorsque le corps flottant effectue des mouvements en rotation.

Grâce à l'augmentation du diamètre de barre et/ou de la limite élastique du matériau d'au moins trois mailles successives en extrémité de chaîne, il est possible de limiter la formation de méplats, et donc la transmission de moments de flexion, entre ces au moins trois mailles les plus exposées aux efforts latéraux.

En particulier, le diamètre de barre de chacune des mailles de la deuxième pluralité peut être sensiblement supérieur à celui de chacune des mailles de la première pluralité, et notamment au moins 1,2 fois le diamètre de chacune des mailles de la première pluralité. Par « sensiblement supérieur » on entend ici que la différence est supérieure aux tolérances de fabrication, qui peuvent atteindre jusqu'à 5% dudit diamètre, par exemple.

D'une part, cette augmentation de diamètre, en diffusant les efforts lors du test de résistance, limite la déformation plastique locale des mailles lors des tests de résistance, réduisant ainsi la formation de méplats. D'autre part, pour un même moment de flexion, la contrainte de flexion est inversement proportionnelle au cube de ce diamètre. En conséquence, même si le bras de levier, et donc le moment de flexion, augmente de manière directement proportionnelle audit diamètre de la maille, pour un même effort latéral la contrainte diminuera avec le carré du diamètre. L'augmentation du diamètre des mailles de la deuxième pluralité permet donc de réduire très sensiblement, grâce à ces deux effets combinés, les contraintes par flexion en tête de chaîne quand la chaîne d'amarrage est soumise à des efforts latéraux par des mouvements de rotation du corps flottant.

Toutefois, alternativement ou en complément à ce diamètre supérieur, la limite élastique du matériau de chacune desdites mailles de la deuxième pluralité peut être sensiblement supérieure à celle de chacune des mailles de la première pluralité, et notamment au moins 1,2 fois la limite élastique du matériau de chacune des mailles de la première pluralité. Par « sensiblement supérieur » on entend ici aussi que la différence est supérieure aux tolérances de fabrication, qui peuvent atteindre jusqu'à 5% de ladite limite élastique, par exemple.

Cette augmentation de la limite élastique, en réduisant la zone de chaque maille de ladite deuxième pluralité qui est affectée par une déformation plastique lors des tests de résistance, permet aussi de réduire la formation de méplats favorisant la transmission de moments de flexion entre mailles adjacentes.

Afin d'offrir une transition graduelle entre les mailles de la première pluralité et celles de la deuxième pluralité, la chaîne d'ancrage peut en outre comprendre au moins une maille intermédiaire entre ladite première pluralité de mailles et lesdites au moins trois mailles successives de la deuxième pluralité, ladite au moins maille intermédiaire étant différente de chacune des mailles de la première pluralité et de la deuxième pluralité. En particulier, ladite au moins une maille intermédiaire peut présenter un diamètre de barre sensiblement supérieur à celui d'une quelconque de ladite première pluralité de mailles, mais inférieur à chacun des mailles de la deuxième pluralité. Plus spécifiquement, la chaîne d'ancrage peut comprendre au moins une première maille intermédiaire adjacente à ladite première pluralité de mailles et au moins une deuxième maille intermédiaire adjacente auxdites au moins trois mailles successives de la deuxième pluralité et présentant un diamètre de barre sensiblement supérieur à celui de la première maille intermédiaire.

Afin d'éviter la fatigue par flexion à l'une ou l'autre extrémité de la chaîne d'ancrage, ladite deuxième pluralité de mailles peut comprendre au moins trois mailles successives à une première extrémité de la chaîne d'ancrage et au moins trois autres mailles successives à une deuxième extrémité de la chaîne d'ancrage, opposée à ladite première extrémité.

La présente invention concerne également un corps flottant avec au moins une telle chaîne d'ancrage. Dans ce contexte, on entend « corps flottant » au sens large, comprenant donc non seulement des corps émergeant au moins partiellement au-dessus d'une surface liquide, mais aussi des corps générant une force de flottaison positive mais maintenus entièrement immergés par leur ancrage.

En particulier, ce corps flottant peut prendre la forme d'une plateforme flottante. Comme ces plateformes sont typiquement destinées à des ancrages statiques de longue durée, il convient particulièrement d'y répondre au problème de la fatigue en flexion de son au moins une chaîne d'ancrage. Toutefois, le corps flottant peut aussi être par exemple un navire.

Par ailleurs, ce corps flottant peut notamment soutenir au moins un dispositif de génération d'énergie électrique, tel que par exemple une turbine éolienne, quoique d'autres types de dispositifs de génération d'énergie électrique, comme par exemple des hydroliennes, ainsi que d'autres applications, notamment dans le domaine pétrolier et gazier, soient également envisageables.

Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :

- la figure 1 illustre un segment de chaîne d'ancrage de l'art antérieur ;
- les figures 2A et 2B illustrent deux vues différentes d'une première maille de la chaîne de la figure 1 ;
- les figures 3A et 3B illustrent deux vues différentes d'une deuxième maille de la chaîne de la figure 1 ;
- les figures 4A et 4B illustrent deux vues différentes d'une troisième maille de la chaîne de la figure 1 ;
- la figure 5 illustre la génération d'un moment de flexion en extrémité de la chaîne de la figure 1 ;
- la figure 6 illustre un segment de chaîne d'ancrage suivant un premier mode de réalisation ;
- la figure 7 illustre un segment de chaîne d'ancrage suivant un deuxième mode de réalisation ;
- la figure 8 illustre schématiquement une plateforme flottante, soutenant une turbine éolienne, et reliée par des chaînes d'ancrage à une pluralité de points d'ancrage ; et
- la figure 9 illustre schématiquement une hydrolienne à flottation positive, maintenue immergée sous la surface de l'eau par des chaînes d'ancrage la reliant à une pluralité de points d'ancrage.

Description détaillée de l'invention

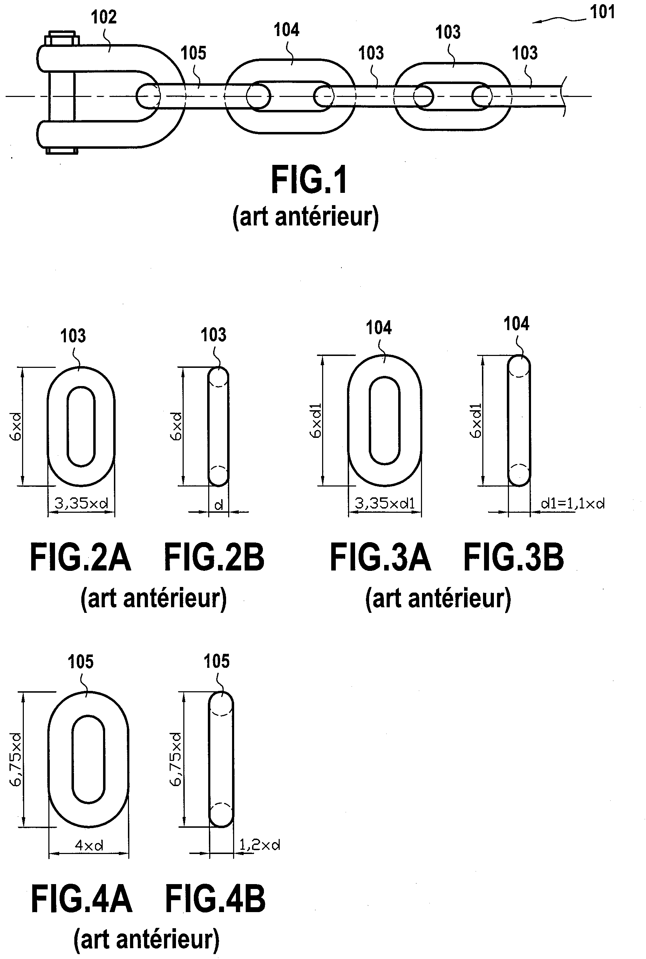

La figure 1 illustre une chaîne d'ancrage 101 suivant l'état de la technique, selon la norme API Spec 2F de l'American Petroleum Institute. Cette chaîne d'ancrage 101, qui est liée en extrémité à une manille d'étalingure 102, comprend une pluralité de mailles courantes 103 successives et, entre ces mailles courantes 103 et la manille 102, une maille élargie standard 104 et une maille d'extrémité 105.

Comme illustré sur les figures 2A et 2B, chaque maille courante 103 présente un diamètre de barre d, une largeur égale à 3,35 fois d, et une longueur égale à six fois d. La maille élargie standard 104, qui dans la chaîne 101 est adjacente à ladite pluralité de mailles courantes 103 successives et qui est illustrée en détail sur les figures 3A et 3B, présente un diamètre de barre d1 égal à 1,1 fois le diamètre de barre d des mailles courantes 103, une largeur égale à 3,35 fois d1 et une longueur égale à six fois d1. Finalement, la maille d'extrémité 105, qui est intercalée entre la maille élargie standard 104 et la manille d'étalingure 102, présente un diamètre de barre égal à 1,2 fois d, une largeur égale à quatre fois d, et une longueur égale à 6,75 fois d, comme illustré sur les figures 4A et 4B.

Bien que la maille élargie standard 104 et la maille d'extrémité 105 aient un diamètre supérieur aux mailles courantes 103, certaines de ces dernières sont suffisamment proches à l'extrémité de la chaîne 101 pour être affectées par des moments de flexion en réponse à des mouvements latéraux du corps flottant solidaire de la manille d'étalingure 102.

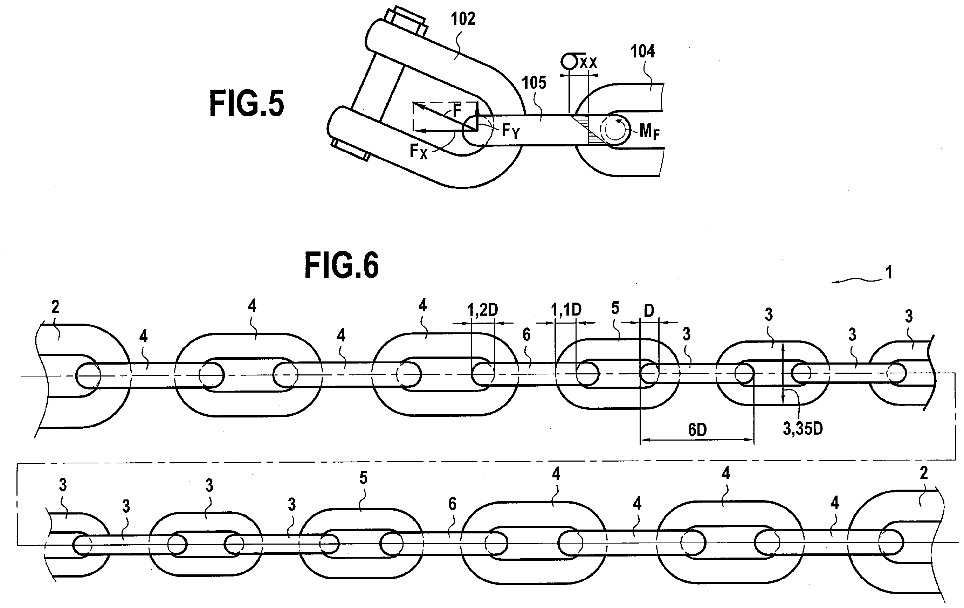

La figure 5 illustre la génération d'un tel moment de flexion $M_F$ quand l'effort F transmis par la manille 102 à la maille d'extrémité 105 n'est plus aligné avec la direction principale X de la chaîne 101, et que des imperfections de surface des mailles 105, 104 et la tension entre elles les empêche de tourner librement l'une par rapport à l'autre. L'effort F se décompose ainsi en une force de tension $F_x$ alignée avec la direction principale X de la chaîne 101, et une force latérale $F_y$ perpendiculaire à celle-ci, cette force latérale $F_y$ générant dans la maille d'extrémité 105 un moment de flexion $M_F$ croissant en direction de la maille standard élargie 104. Dans la maille d'extrémité 104, ce moment de flexion $M_F$ se traduit en une contrainte supplémentaire $\sigma_{xx}$ perpendiculairement à la section transversale de la maille d'extrémité 104. Comme expliqué dans le résumé de l'invention, à long terme, ces contraintes supplémentaires, qui sont variables, peuvent causer une fracture par fatigue.

Pour éviter cela, dans un premier mode de réalisation illustré sur la figure 6, une chaîne d'ancrage 1 comprend, entre deux extrémités liées à des manilles d'étalingure 2, une première pluralité de mailles courantes 3 successives et une deuxième pluralité de mailles d'extrémité 4 élargies comprenant au moins trois mailles d'extrémité 4 successives à chaque extrémité de la chaîne 1. Plus spécifiquement, dans le mode de réalisation illustré, cette deuxième pluralité de mailles d'extrémité 4 comprend quatre mailles d'extrémité 4 à chaque extrémité de la chaîne 1. Pour assurer une transition graduelle entre les mailles courantes 3 et les mailles d'extrémité 4, la chaîne 1 comprend aussi, de chaque côté, une première maille intermédiaire 5, adjacente aux mailles courantes 3, et une deuxième maille intermédiaire 6, adjacente aux mailles d'extrémité 4.

Dans cette chaîne 1, chacune des mailles courantes 3 présente un diamètre de barre D, la première maille intermédiaire 5 présente un diamètre de barre sensiblement supérieur au diamètre de barre D des mailles courantes 3, par exemple 1,1 fois D, la deuxième maille intermédiaire 6 présente un diamètre de barre sensiblement supérieur au diamètre de barre de la première maille intermédiaire 5, par exemple 1,2 fois D, et chacune des mailles d'extrémité 4 présente un diamètre de barre $D_{extrem}$ sensiblement supérieur au diamètre de barre de la deuxième maille intermédiaire 6, par exemple 1,3 fois D. Dans le mode de réalisation illustré, toutes les mailles 3,4,5 et 6 ont par ailleurs les mêmes rapports diamètre/largeur/longueur de 1 : 3,35 : 6.

En outre, les mailles d'extrémité 4 présentent non seulement un diamètre de barre sensiblement supérieur aux autres mailles 3,5,6, mais leur matériau présente aussi une limite élastique en tension sensiblement plus élevée que celle des mailles courantes 3, par exemple plus élevée de 20%.

Grâce à leur plus grand diamètre et à leur limite élastique en tension plus élevée, les mailles d'extrémité 4 sont sensiblement moins sensibles aux efforts latéraux que les mailles courantes 3. Pour un même effort latéral, le moment

de flexion $M_{extrem}$ transmis entre deux telles mailles d'extrémité 4 peut être défini par la formule :

$$M_{extrem} = M_{courant} \cdot K_{mat} \cdot K_{diam} \cdot D_{extrem}/D$$

dans laquelle $M_{courant}$ correspond au moment de flexion qui serait transmis entre des mailles de dimensions et matériau identiques à ceux des mailles courantes 3 à la place des mailles d'extrémité 4, $K_{mat}$ à un coefficient d'amélioration due à l'augmentation de la limite élastique, et $K_{diam}$ à un coefficient d'amélioration due à l'augmentation du diamètre de barre. Le facteur $D/D_{extrem}$ correspond à l'augmentation du bras de levier à cause de l'augmentation du diamètre de barre et des autres dimensions de la maille.

Une augmentation de 20% du domaine élastique du matériau des mailles d'extrémité 4 par rapport à la charge d'épreuve à laquelle la chaîne 1 sera testée, qui correspond à 70% de la charge de rupture des mailles plus faibles de la chaîne 1, c'est-à-dire des mailles courantes 3, permet une réduction de la surface de contact affectée par les tests de résistance, résultant en une diminution du facteur de concentration de contraintes (SCF) de $SCF_{courant} = 1,25$ pour une maille avec la limite élastique des mailles courantes 3 à $SCF_{extrem} = 1,06$ pour les mailles d'extrémité 4. Le coefficient $K_{mat}$ peut être calculé suivant la formule suivante :

$$K_{mat} = 1- SCF_{extrem}/SCF_{courant}$$

ce qui, avec les valeurs susmentionnées, résulte en $K_{mat} = 0,85$.

Par ailleurs, le plus grand diamètre des mailles d'extrémité 4 induit aussi une réduction des surfaces de contact entre mailles adjacentes altérées par l'épreuve de charge, réduction se traduisant dans le coefficient $K_{diam}$, lequel, dans le mode de réalisation illustré, peut être de 0,95.

Surtout, pour un même moment de flexion transmis entre mailles adjacentes, la contrainte en flexion est inversement proportionnelle au cube du diamètre de barre des mailles.

En conséquence, si $\sigma_{xx,extrem}$ représente la contrainte induite par le moment de flexion $M_{extrem}$ dans une telle maille d'extrémité 4, et $\sigma_{xx,courant}$ la contrainte qui serait induite par le moment de flexion $M_{courant}$ dans une maille courante 3, la relation entre ce deux contraintes peut être exprimée par la formule suivante :

$$\sigma_{xx,extrem} = \sigma_{xx,courant} \cdot K_{mat} \cdot K_{diam} \cdot (D/D_{extrem})^2$$

ce qui, avec les valeurs susmentionnées, résulte en $\sigma_{xx,extrem} = 0,48 \cdot \sigma_{xx,courant}$.

Avec ces valeurs, les contraintes induites par flexion en tête de chaîne seraient donc réduites de plus de moitié, ce qui signifierait une multiplication de la durée de vie de la chaîne 1 d'un facteur $1/0,48^3 = 9,04$.

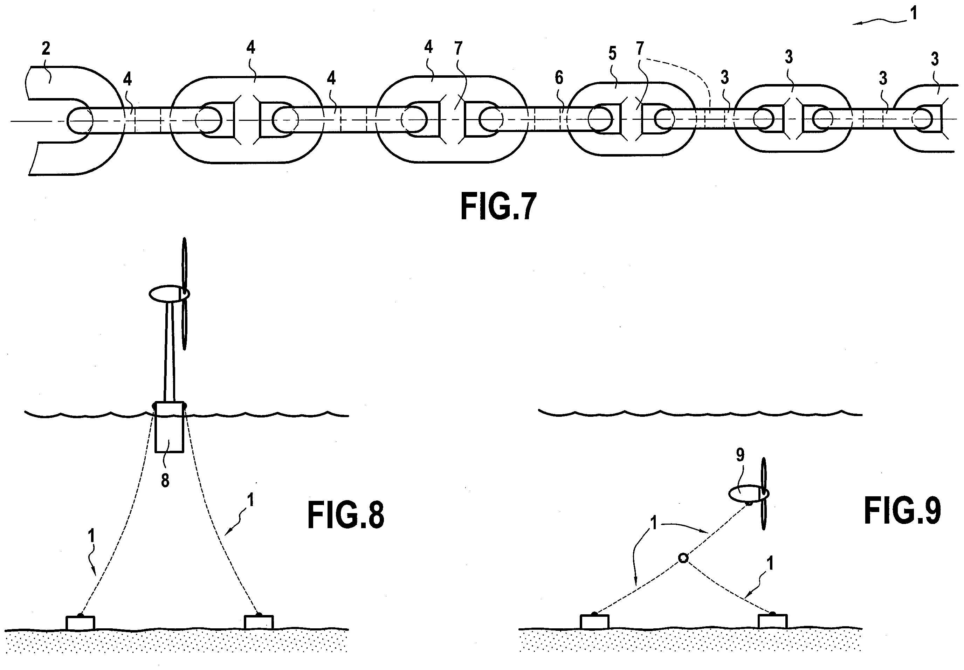

Bien que dans ce premier mode de réalisation les mailles 3,4,5 et 6 ne soient pas étançonnées, le même principe est également applicable à des mailles à étais, telle que celles de la chaîne du deuxième mode de réalisation, illustrée sur la figure 7. A part les étais transversaux 7 des mailles, tous les éléments sont équivalents à ceux du mode de réalisation de la chaîne de la figure 6 et reçoivent donc les mêmes chiffres de référence.

Par ailleurs, bien que dans les deux modes de réalisation illustrés les chaînes d'ancrage soient pourvues de mailles d'extrémité et intermédiaires élargies aux deux extrémités de la chaîne, il est également possible de n'en pourvoir qu'une seule extrémité de la chaîne.

Par leur résistance accrue à la fatigue, ces chaînes sont particulièrement applicables pour l'ancrage à long terme de corps flottants, tels qu'une plateforme flottante 8 soutenant une turbine éolienne pour la génération d'énergie électrique, comme illustré sur la figure 8, ou une hydrolienne sous-marine 9, comme illustré sur la figure 9.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Chaîne d'ancrage (1) comprenant une première pluralité de mailles (3) et **caractérisée en ce qu'**elle comprend aussi, en extrémité de chaîne, une deuxième pluralité de mailles (4) comprenant au moins trois mailles (4) successives, dans chacune desquelles au moins un parmi le diamètre de barre et la limite élastique du matériau est sensiblement supérieur à celui de chacune des mailles (3) de la première pluralité.

2. Chaîne d'ancrage (1) suivant la revendication 1, dans laquelle le diamètre de barre de chacune des mailles (4) de la deuxième pluralité est sensiblement supérieur à celui de chacune des mailles (3) de la première pluralité.

3. Chaîne d'ancrage (1) suivant la revendication 2, dans laquelle le diamètre de barre de chacune des mailles (4) de la deuxième pluralité est au moins 1,2 fois celui de chacune des mailles (3) de ladite première pluralité.

4. Chaîne d'ancrage (1) suivant l'une quelconque des revendications 1 à 3, dans laquelle la limite élastique du matériau de chacune desdites mailles (4) de la deuxième pluralité est sensiblement supérieure à celle de chacune des mailles (3) de la première pluralité.

5. Chaîne d'ancrage (1) suivant la revendication 4, dans laquelle la limite élastique du matériau de chacune des mailles (4) de la deuxième pluralité est au moins 1,2 fois celle du matériau de chacune des mailles (3) de la première pluralité.

6. Chaîne d'ancrage (1) suivant l'une quelconque des revendications précédentes, comprenant en outre au moins une maille intermédiaire (5,6) entre ladite première pluralité de mailles (3) et lesdites au moins trois mailles (4) successives de la deuxième pluralité, ladite au moins maille intermédiaire (5,6) étant différente de chacune des mailles (3,4) de la première pluralité et de la deuxième pluralité.

7. Chaîne d'ancrage (1) suivant la revendication 6, dans lequel ladite au moins une maille intermédiaire (5,6) présente un diamètre de barre sensiblement supérieur à celui de chacune de ladite première pluralité de mailles (3), mais inférieur à chacune des mailles (4) de la deuxième pluralité.

8. Chaîne d'ancrage (1) suivant la revendication 7, comprenant au moins une première maille intermédiaire (5) adjacente à ladite première pluralité de mailles (3) et au moins une deuxième maille intermédiaire (6) adjacente auxdites au moins trois mailles (4) successives de la deuxième pluralité et présentant un diamètre de barre sensiblement supérieur à celui de la première maille intermédiaire (5).

9. Chaîne d'ancrage (1) suivant l'une quelconque des revendications précédentes, dans laquelle ladite deuxième pluralité de mailles (4) comprend au moins trois mailles (4) successives à une première extrémité de la chaîne d'ancrage (1) et au moins trois autres mailles successives à une deuxième extrémité de la chaîne d'ancrage (1), opposée à ladite première extrémité.

10. Corps flottant (8,9) avec au moins une chaîne d'ancrage (1) suivant l'une quelconque des revendications précédentes.

11. Corps flottant (8,9) suivant la revendication 10, en forme de plateforme flottante.

12. Corps flottant (8,9) suivant l'une quelconque des revendications 10 ou 11, soutenant au moins un dispositif de génération d'énergie électrique.

13. Corps flottant (8) suivant la revendication 12, dans lequel ledit dispositif de génération d'énergie électrique est une turbine éolienne.

**Patentansprüche**

1. Ankerkette (1), die eine erste Vielzahl von Kettengliedern (3) umfasst und **dadurch gekennzeichnet ist, dass** sie auch an einem Kettenende eine zweite Vielzahl von Kettengliedern (4) mit wenigstens drei aufeinanderfolgenden Kettengliedern (4) umfasst, bei jedem von denen wenigstens eine(r) aus Stangendurchmesser und Elastizitätsgrenze des Materials deutlich größer als der-/diejenige eines jeden der Kettenglieder (3) der ersten Vielzahl ist.

2. Ankerkette (1) nach Anspruch 1, bei der der Stangendurchmesser eines jeden der Kettenglieder (4) der zweiten Vielzahl deutlich größer als derjenige eines jeden der Kettenglieder (3) der ersten Vielzahl ist.

3. Ankerkette (1) nach Anspruch 2, bei der der Stangendurchmesser eines jeden der Kettenglieder (4) der zweiten Vielzahl wenigstens das 1,2-fache desjenigen eines jeden der Kettenglieder (3) der ersten Vielzahl ist.

4. Ankerkette (1) nach einem der Ansprüche 1 bis 3, bei der die Elastizitätsgrenze des Materials eines jeden der Kettenglieder (4) der zweiten Vielzahl deutlich größer als diejenige eines jeden der Kettenglieder (3) der ersten Vielzahl ist.

5. Ankerkette (1) nach Anspruch 4, bei der die Elastizitätsgrenze des Materials eines jeden der Kettenglieder (4) der zweiten Vielzahl wenigstens das 1,2-fache derjenigen des Materials eines jeden der Kettenglieder (3) der ersten Vielzahl ist.

6. Ankerkette (1) nach einem der vorhergehenden Ansprüche, die ferner wenigstens ein Zwischenkettenglied (5, 6) zwischen der ersten Vielzahl von Kettengliedern (3) und den wenigstens drei aufeinanderfolgenden Kettengliedern (4) der zweiten Vielzahl umfasst, wobei das wenigstens eine Zwischenkettenglied (5, 6) von jedem der Kettenglieder (3, 4) der ersten Vielzahl und der zweiten Vielzahl verschieden ist.

7. Ankerkette (1) nach Anspruch 6, bei der das wenigstens eine Zwischenkettenglied (5, 6) einen Stangendurchmesser aufweist, der deutlich größer als derjenige eines jeden der ersten Vielzahl von Kettengliedern (3), aber kleiner als ein jedes der Kettenglieder (4) der zweiten Vielzahl ist.

8. Ankerkette (1) nach Anspruch 7, umfassend wenigstens ein zu der ersten Vielzahl von Kettengliedern (3) benachbartes erstes Zwischenkettenglied (5) und wenigstens ein zweites Zwischenkettenglied (6), das zu den wenigstens drei aufeinanderfolgenden Kettengliedern (4) der zweiten Vielzahl benachbart ist und einen Stangendurchmesser aufweist, der deutlich größer als derjenige des ersten Zwischenkettengliedes (5) ist.

9. Ankerkette (1) nach einem der vorhergehenden Ansprüche, bei der die zweite Vielzahl von Kettengliedern (4) wenigstens drei aufeinanderfolgende Kettenglieder (4) an einem ersten Ende der Ankerkette (1) und wenigstens drei weitere aufeinanderfolgende Kettenglieder an einem zu dem ersten Ende entgegengesetzten zweiten Ende der Ankerkette (1) umfasst.

10. Schwimmkörper (8, 9) mit wenigstens einer Ankerkette (1) nach einem der vorhergehenden Ansprüche.

11. Schwimmkörper (8, 9) nach Anspruch 10, in Form einer schwimmenden Plattform.

12. Schwimmkörper (8, 9) nach einem der Ansprüche 10 oder 11, der wenigstens eine Vorrichtung zur Erzeugung von elektrischer Energie stützt.

13. Schwimmender Körper (8) nach Anspruch 12, bei dem die Vorrichtung zur Erzeugung von elektrischer Energie eine Windkraftanlage ist.

**Claims**

1. An anchor chain (1) comprising a first plurality of links (3) and **characterized in that** it also includes, at an end of the chain, a second plurality of links (4) comprising at least three successive links (4) in each of which at least one property selected from its bar diameter and the elastic limit of its material is substantially greater than in each of the links (3) of the first plurality.

2. An anchor chain (1) according to claim 1, wherein the bar diameter of each of the links (4) of the second plurality is substantially greater than the bar diameter of each of the links (3) of the first plurality.

3. An anchor chain (1) according to claim 2, wherein the bar diameter of each of the links (4) of the second plurality is at least 1.2 times the bar diameter of each of the links (3) of the first plurality.

4. An anchor chain (1) according to any one of claims 1 to 3, wherein the elastic limit of the material of each of the links (4) of the second plurality is substantially greater than the elastic limit of the material of each of the links (3) of the first plurality.

5. An anchor chain (1) according to claim 4, wherein the elastic limit of the material of each of the links (4) of the second plurality is at least 1.2 times the elastic limit of the material of each of the links (3) of the first plurality.

6. An anchor chain (1) according to any preceding claim further including at least one intermediate link (5, 6) between said first plurality of links (3) and said at least three successive links (4) of the second plurality, said at least one intermediate link (5, 6) differing from each of the links (3, 4) of the first plurality and of the second plurality.

7. An anchor chain (1) according to claim 6, wherein said at least one intermediate link (5, 6) presents a bar diameter substantially greater than the bar diameter of each of said first plurality of links (3), but less than the bar diameter of each of the links (4) of the second plurality.

8. An anchor chain (1) according to claim 7, including at least one first intermediate link (5) adjacent to said first plurality of links (3), and at least one second intermediate link (6) adjacent to said at least three successive links (4) of the second plurality and presenting a bar diameter that is substantially greater than the bar diameter of the first intermediate link (5).

9. An anchor chain (1) according to any preceding claim, wherein said second plurality of links (4) comprises at least three successive links (4) at a first end of the anchor chain (1) and at least three other successive links at a second end of the anchor chain (1), opposite from said first end.

10. A floating body (8, 9) having at least one anchor chain (1) according to any preceding claim.

11. A floating body (8, 9) according to claim 10, in the form of a floating platform.

12. A floating body (8, 9) according to claim 10 or claim 11, supporting at least one device for generating electricity.

13. A floating body (8) according to claim 12, wherein said device for generating electricity is a wind turbine.

**FIG.1**

(art antérieur)

**FIG.2A    FIG.2B**

(art antérieur)

**FIG.3A    FIG.3B**

(art antérieur)

**FIG.4A    FIG.4B**

(art antérieur)

FIG.5

FIG.6

EP 3 060 464 B1

**FIG.7**

**FIG.8**

**FIG.9**

EP 3 060 464 B1

**RÉFÉRENCES CITÉES DANS LA DESCRIPTION**

**Documents brevets cités dans la description**

- KR 20130044994 A
- WO 2010112603 A
- WO 9840306 A
- WO 20080951106 A
- FR 2601322